# EUROPÄISCHE PATENTANMELDUNG

(11) **EP 1 764 400 A1**
(43) Veröffentlichungstag der Anmeldung: **21.03.2007**
(21) Anmeldenummer: 06120032.5
(22) Anmeldetag: 04.09.2006
(51) Int. Cl.: C09J 7/02

(54) **Selbstklebeband**

(30) Priorität: 16.09.2005 DE 102005044517
(71) Anmelder: tesa AG, 20253 Hamburg (DE)
(72) Erfinder: Katsch, Ralf, 22457 Hamburg (DE)

(57) **Zusammenfassung**

Es wird ein Selbstklebeband (100) mit einer Trägerschicht (10) und einer Haftschicht (11) offenbart, bei der zur Erleichterung der Handhabbarkeit des Selbstklebebands (100) auf die Haftschicht (11) abschnittsweise ein UV-beständiger Lack (12) aufgebracht ist. Des Weiteren wird ein Verfahren zur Beschichtung des Selbstklebebands (100) angegeben.

## Beschreibung

Die Erfindung betrifft ein Selbstklebeband mit einer Trägerschicht und einer Haftschicht.

Selbstklebebänder sind dem Fachmann in verschiedenen Ausführungsformen bekannt und geläufig. Sie bestehen üblicher Weise aus einer Trägerfolie vorzugsweise aus einem hierfür geeigneten Kunststoffmaterial sowie einer Haftschicht aus einem vom Fachmann in an sich beliebiger Weise gestaltbaren Klebstoff. Selbstklebebänder sind vorzugsweise derart ausgelegt, dass sie auf eine beliebige Oberfläche aufgeklebt und von dieser Oberfläche wieder rückstandsfrei abgelöst werden können.

In an sich bekannter Weise werden Selbstklebebänder mit einer Breite von ca. 10mm und einer Länge von beispielsweise 50m zu einer Rolle aufgerollt zum Kauf angeboten.

Hierbei stellt sich häufig das Problem, dass der Anfang des Selbstklebebands der an der Rolle angeklebt ist, zum Einen schwer zu finden und zum Anderen häufig nur unter Schwierigkeiten von der darunter liegenden Lage des aufgerollten Selbstklebebands abgelöst werden kann. Hierdurch ist die Handhabung des zu einer Rolle aufgerollten Selbstklebebandes erschwert. Ebenso kann ein auf einer Oberfläche aufgeklebter Streifen des Selbstklebebands häufig nur mühsam wieder abgelöst werden, da insbesondere seine Enden an der Oberfläche festgeklebt sind.

Ausgehend von diesem Stand der Technik ist der Fachmann vor die Aufgabe gestellt, ein Selbstklebeband anzugeben, das in einfacher Weise auf beliebige Oberflächen aufgeklebt werden kann. Des Weiteren soll ein Verfahren zur Erleichterung der Handhabung eines Selbstklebebands angegeben werden.

Diese Aufgaben werden durch die in den Ansprüchen 1 und 4 angegebenen Merkmale gelöst.

Der Kerngedanke der Erfindung steht darin, dass ein an sich bekanntes Selbstklebeband, das im Wesentlichen aus einer Trägerschicht, beispielsweise aus einer gereckten Kunststofffolie, sowie einer vom Fachmann an sich beliebig ausgestaltbaren Haftschicht besteht, abschnittsweise mit einem UV-beständigen Lack versehen ist. In den Bereichen, auf denen der UV-beständige Lack auf die Haftschicht aufgetragen ist, werden somit nichtklebende Zonen auf dem Selbstklebeband gebildet. Dabei wird der Lack vorzugsweise so dünn aufgetragen, dass die Gesamtdicke des Selbstklebebands nicht wesentlich erhöht ist bzw. beim Aufkleben des Selbstklebebands auf eine Oberfläche durch diese Beschichtung keine wesentlichen Unebenheiten entstehen.

An diesen zusätzlich beschichteten Abschnitten kann das Selbstklebeband von beiden Seiten, d. h. sowohl an der Träger- als auch an der Haftschicht, von einem Nutzer angefasst werden, ohne dass er an dem Selbstklebeband haften bleibt. Vorzugsweise sind diese Abschnitte an dem Selbstklebeband, das beispielsweise 10mm breit ist, jeweils äquidistant angeordnet, so dass zwischen diesen Abschnitten jeweils gleichlange Abschnitte des Selbstklebebands gebildet werden, die klebend sind. Prinzipiell kann das Selbstklebeband einen ein- oder mehrschichtigen Aufbau aufweisen.

Es wird ein UV-beständiger Lack gewählt, da dieser einerseits ausreichend dünn auftragbar ist und andererseits dadurch das Selbstklebeband in Außenbereichen eingesetzt werden kann, ohne dass durch Sonnenstrahlung diese nichthaftende Beschichtung beeinträchtigt werden würde.

Der Vorteil der Erfindung besteht darin, dass durch das Aufbringen eines vom Fachmann in Abhängigkeit des Materials des Selbstklebebands bzw. der Trägerschicht sowie des für die Haftschicht verwendeten Klebstoffs auswählbaren UV-beständigen Lacks auf das Selbstklebeband dieses in diesen Bereichen angefasst werden kann, ohne dass das Selbstklebeband z. B. an einem Finger festklebt. Das zusätzliche abschnittsweise Aufbringen des UV-beständigen Lacks kann dabei bei der Herstellung des Selbstklebebands ohne wesentlichen Aufwand durchgeführt werden.

Vorteilhafte Ausgestaltungen der Erfindung sind jeweils in den Unteransprüchen gekennzeichnet.

In bevorzugter Weise ist die Haftschicht des Selbstklebebands, wie im Anspruch 2 angegeben, ein Naturkautschuk oder ein acrylatbasierender Kleber deren Verwendung bei Selbstklebebändern dem Fachmann möglich ist.

Vorzugsweise wird entsprechend dem Anspruch 3 das Selbstklebeband, das beispielsweise eine Breite von 10mm aufweist, jeweils in einem Abstand von 100mm über eine Länge von jeweils 50mm mit dem UV-beständigen Lack beschichtet, um nichtklebende Abschnitte des Selbstklebebands zu erhalten.

Zur Herstellung eines Selbstklebebands ist im Anspruch 5 vorgeschlagen, dass das Selbstklebeband in an sich bekannter Weise in Form eines zu einer Rolle aufgewickelten Ballens hergestellt wird, wobei das Selbstklebeband zumindest eine Trägerschicht und eine Haftschicht aufweist. Von diesem Ballen wird eine Bahn abgezogen und auf diese Bahn ein UV-beständiger Lack mit Hilfe einer Walze abschnittsweise aufgebracht. Nachfolgend kann diese Bahn mit Hilfe von Messern zu einzelnen Streifen aufgetrennt werden, die wiederum jeweils zu einer Rolle aufgewickelt werden.

Zur weiteren Handhabung des Selbstklebebandes ist im Anspruch 6 vorgeschlagen, dass das Selbstklebeband im Bereich der zusätzlichen Beschichtung mit dem UV-beständigen Lack durchtrennt wird. Somit werden einzelne Streifen des Selbstklebebands erhalten, deren Enden jeweils durch die zusätzliche Beschichtung nichtklebend ausgeführt sind. Dadurch kann dieser Streifen des Selbstklebebandes in einfacher Weise auf einem Untergrund festgeklebt und später wieder abgezogen werden, da die Enden nicht auf dem Untergrund haften.

Ein Ausführungsbeispiel der Erfindung wird nachstehend anhand der Zeichnungen näher erläutert. Es zeigen:
- Fig. 1:: ein Selbstklebeband im Querschnitt,
- Fig. 2:: einen Ballen bei der Herstellung des Selbstklebebands,
- Fig. 3:: das Zerschneiden einer Bahn des Ballens,
- Fig. 4:: ein zu einer Rolle aufgewickeltes Selbstklebeband, und
- Fig. 5:: einen Streifen des Selbstklebebands.

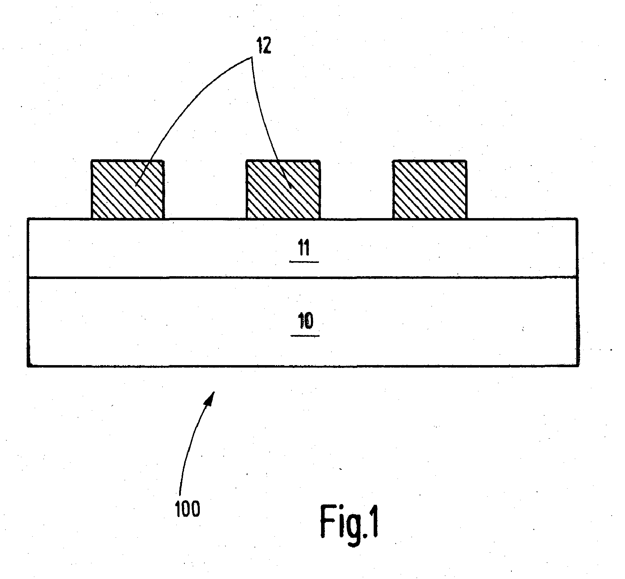

Der schematischen und nicht maßstabsgetreuen Darstellung in Figur 1 lässt sich der grundsätzliche Aufbau eines Selbstklebebandes 100 entnehmen. Es besteht im Wesentlichen aus einer Trägerschicht 10, beispielsweise einer gereckten Kunststofffolie, und einer Haftschicht 11, beispielsweise einem Naturkautschuk. Die Haftschicht 11 ist vorzugsweise äquidistant voneinander beabstandet mit einem UV-beständigen Lack 12 beschichtet, der die Klebewirkung in den zusätzlich beschichteten Abschnitten neutralisiert. Somit kann das Selbstklebeband 100 in diesen Bereichen angefasst werden, ohne dass das Selbstklebeband 100 an einem Finger oder einer beliebigen Oberfläche festklebt. Der UV-beständige Lack 12 kann vom Fachmann in Abhängigkeit des Materials der Trägerschicht 10 bzw. der Haftschicht 11 gewählt werden. Zusätzlich kann eine Abdeckfolie für die Haftschicht 11 vorgesehen sein und/oder das Selbstklebeband 100 einen mehrschichtigen Aufbau aufweisen.

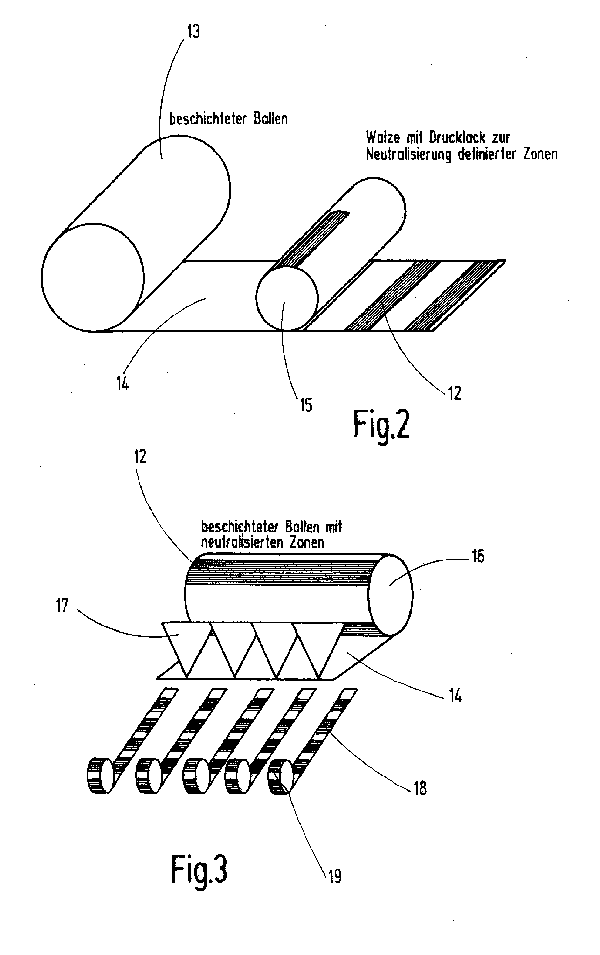

Zur Herstellung des Selbstklebebands 100 wird eine Bahn 14 von einem Ballen 13 abgerollt und mit Hilfe einer Walze 15 mit einem UV-beständigen Drucklack 12 beschichtet, wie es in Figur 2 dargestellt ist.

Nachfolgend wird entsprechend der Figur 3 die wiederum zu einem beschichteten Ballen 16 aufgerollte Bahn 14 von diesem abgerollt und mit Hilfe von Messern 17 zu mehreren Streifen 18 zerschnitten, die wiederum zu Rollen 19 aufgerollt werden können.

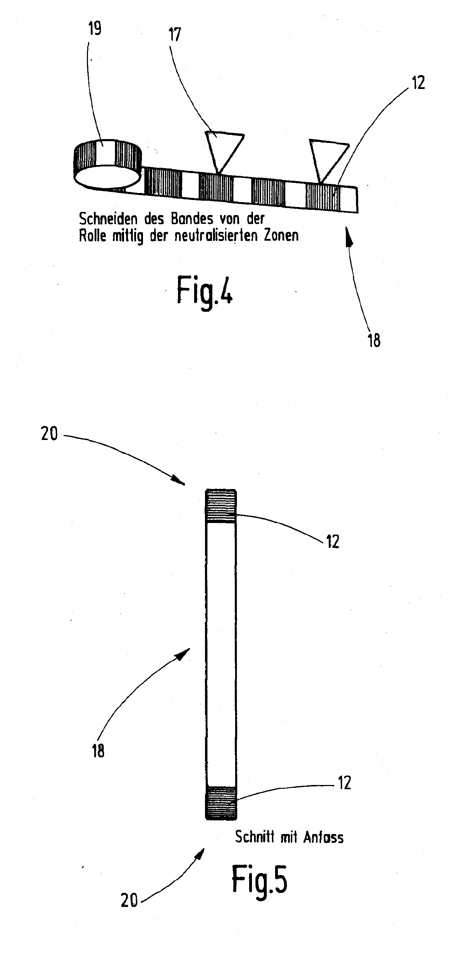

Zur Handhabung des Selbstklebebands 100 können die von der Rolle 19 abgewickelten Streifen 18 im Bereich der zusätzlichen Beschichtung mit UV-beständigen Lack 12 wiederum mit weiteren Messern 17, Scheren oder dergleichen in einzelne Streifen 18 zerteilt werden, wie aus den Figuren 4 und 5 ersichtlich. Somit werden einzelne kurze Streifen 18 erhalten, deren Enden 20 jeweils durch die zusätzlich Beschichtung mit einem UV-beständigen Lack 12 nichtklebend ausgeführt und somit in einfacher Weise handhabbar sind.

Beispielsweise kann mit einem derartigen Streifen 18 ein beliebiger Gegenstand wie ein Kabel einer Scheibenheizung oder einer Scheibenantenne auf dem Scheibenglas festgeklebt werden. Dabei haften die Enden 20 des Streifens 18 nicht auf dem Untergrund und nach der Montage der Scheibe im Kraftfahrzeug kann der Streifen 18 ohne Schwierigkeiten an einem Ende 20 ergriffen und abgezogen werden, wobei die Haftschicht vorzugsweise derart ausgelegt ist, dass das Selbstklebeband 100 rückstandsfrei vom Untergrund abgelöst werden kann.

### Bezugszeichenliste

- 100: Selbstklebeband
- 10: Trägerschicht
- 11: Haftschicht
- 12: UV-beständiger Lack
- 13: Ballen
- 14: Bahn
- 15: Walze
- 16: beschichteter Ballen
- 17: Messer
- 18: Streifen
- 19: Rolle
- 20: Ende

## Patentansprüche

1. Selbstklebeband (100) mit einer Trägerschicht (10) und einer Haftschicht (11), **dadurch gekennzeichnet, dass** auf die Haftschicht (11) abschnittsweise ein UV-beständiger Lack (12) aufgebracht ist.

2. Selbstklebeband nach Anspruch 1, **dadurch gekennzeichnet, dass** die Haftschicht (11) ein Naturkautschuk oder ein acrylatbasierender Kleber ist.

3. Selbstklebeband nach Anspruch 1 oder 2, **dadurch gekennzeichnet, dass** der UV-beständige Lack (12) in einem Abstand von 100 mm jeweils auf einer Länge von 50mm auf das Selbstklebeband (100) aufgebracht ist.

4. Verfahren zur Erleichterung der Handhabung eines Selbstklebebands (100), **dadurch gekennzeichnet, dass** auf eine Haftschicht (11) des Selbstklebebands (100) abschnittsweise ein UV-beständiger Lack (12) aufgetragen wird.

5. Verfahren nach Anspruch 4, **dadurch gekennzeichnet, dass** eine von einem Ballen (13) abgewickelte Bahn (14) mit Hilfe einer Walze (15) abschnittsweise mit einem UV-beständigen Lack (12) versehen wird.

6. Verfahren nach Anspruch 5, **dadurch gekennzeichnet, dass** das Selbstklebeband (100) im Bereich des UV-beständigen Lacks (12) durchschnitten wird.
